(19) Europäisches Patentamt
European Patent Office
Office européen des brevets

(11) **EP 1 259 077 A1**

(12) **DEMANDE DE BREVET EUROPEEN**

(43) Date de publication:
**20.11.2002 Bulletin 2002/47**

(51) Int Cl.⁷: **H04N 7/20**, H04N 5/44, H03D 7/16

(21) Numéro de dépôt: **02291175.4**

(22) Date de dépôt: **10.05.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **18.05.2001 FR 0106592**

(71) Demandeur: **STMicroelectronics S.A.**
**92120 Montrouge (FR)**

(72) Inventeurs:
• **Busson, Pierre**
**38000 Grenoble (FR)**
• **Louis-Gavet, Bernard**
**38360 Noyaret (FR)**
• **Jouffre, Pierre-Olivier**
**38000 Grenoble (FR)**

(74) Mandataire: **Casalonga, Axel**
**Bureau D.A. Casalonga-Josse**
**Paul-Heyse-Strasse 33**
**80336 Munich (DE)**

(54) **Composant électronique permettant le décodage d'un canal de transmission radiofréquence véhiculant des informations numériques codées, en particulier pour la télédiffusion numérique par satellite**

(57) Le composant CMP, totalement intégré sur un substrat monolythique, incorpore un tuner BAN, BNM, un démodulateur et un décodeur de canal DM. Le filtrage global est réalisé en deux parties, un filtrage analogique FBB 1, FBB2 en bande de base et un filtrage de Nyquist numérique éliminant les informations de canaux adjacents. Il délivre en sortie un flux FM de données MPEG.

FIG.1

**Description**

L'invention concerne le décodage d'un canal de transmission radiofréquence véhiculant des informations numériques codées. Elle s'applique avantageusement mais non limitativement à la télédiffusion numérique par satellite telle que définie dans la spécification européenne DVB-S (Digital Video Broadcasting-satellite) basée sur les normes de compression MPEG, et utilisant par exemple pour véhiculer les informations, une modulation numérique en quadrature. L'invention concerne ainsi notamment les synthonisateurs ("tuner" en langue anglaise), en particulier du type à fréquence intermédiaire nulle, tels que par exemple ceux incorporés dans les récepteurs-satellite avec décodeurs de données d'images comprimées ("Set-top box" en langue anglaise),mais aussi les démodulateurs et le traitement proprement dit de décodage de canal.

Les signaux de télévision en provenance d'un satellite sont amplifiés et convertis dans une bande de fréquences prédéterminée (typiquement 950-2150 MHz) par l'intermédiaire d'une parabole et d'un convertisseur à faible bruit situé au foyer de la parabole.

Ce signal est ensuite envoyé à l'entrée du synthonisateur du récepteur. Le synthonisateur a pour but de sélectionner le canal désiré et de sortir un signal en bande de base sur la voie en phase (voie I) et sur la voie en quadrature (voie Q). Ce signal est ensuite converti en un signal numérique et démodulé. Les traitements de décodage de canal comportent ensuite également un bloc qui distingue, typiquement au moyen d'une logique majoritaire les zéros des uns, puis effectuent l'ensemble de la correction d'erreur, c'est-à-dire typiquement un décodage de Viterbi, le désentrelacement, un décodage de Reed-Solomon et le débrassage. Le dispositif de décodage de canal fournit en sortie des paquets qui sont décodés de façon classique dans un dispositif de décodage de source conforme aux normes MPEG de façon à redélivrer en sortie les signaux audio et vidéo initiaux transmis via le satellite.

A l'entrée du récepteur, le signal reçu est composé de l'ensemble des canaux émis pour le satellite et transposés dans la bande de fréquence 950-2150 MHz. La puissance globale reçue est sensiblement égale à la puissance moyenne sur un canal augmentée de dix fois le logarithme népérien du nombre des canaux. Ce signal possède une variation importante, de l'ordre de 50 dBm.

Actuellement, dans l'ensemble des récepteurs, le signal reçu en entrée est normalement filtré par un filtre de type large bande (dont la bande passante est de l'ordre de plusieurs centaines de MHz) disposé juste après l'amplificateur d'entrée faible bruit, et ce afin d'éviter la saturation des étages suivants du synthonisateur (notamment les étages d'amplification à gain commandé ainsi que les mélangeurs de l'étage de transposition de fréquence). Par ailleurs, les solutions actuelles prévoient de réaliser à l'extérieur de la puce contenant l'étage d'amplification à gain commandé ainsi que l'étage de transposition de fréquence, l'amplificateur d'entrée à faible bruit ainsi que les filtres large bande. Ces filtres, dont les fréquences de coupure sont ajustables par la sélection du canal désirée, sont alors réalisés par des composants discrets tels que des diodes "varicap".

Or, de tels composants présentent une taille trop importante incompatible avec une réalisation totalement intégrée du synthonisateur.

Par ailleurs, non seulement le synthonisateur n'est pas totalement intégré, mais il est réalisé sur un substrat semiconducteur différent du substrat qui supporte la partie numérique des traitements, à savoir la démodulation et le décodage de canal proprement dit. En d'autres termes, la démodulation et le décodage de canal sont réalisés dans un composant distinct de celui intégrant le tuner. Et, le synthonisateur est généralement blindé pour éviter que le bruit généré par la partie numérique ne vienne interférer dans le mélange des signaux de la partie analogique.

Ainsi, à l'heure actuelle, un dispositif de tête ("Front end" en langue anglaise) incorporé dans un récepteur de signaux de télévision par satellite, et capable d'effectuer la synthronisation, la démodulation et le décodage de canal, comporte plusieurs composants électroniques distincts réalisés sur des puces différentes.

Or, ceci présente l'inconvénient d'un surcoût et d'un encombrement surfacique important.

L'invention vise à apporter une solution à ce problème.

Un but de l'invention est de proposer un composant électronique "front end" unique, c'est-à-dire réalisé sur une seule puce, et intégrant un synthonisateur radiofréquence, un démodulateur et un décodeur de canal.

L'invention propose donc un composant électronique comprenant un circuit intégré réalisé sur un substrat semiconducteur monolythique et incorporant

- un module de synthonisation du type à fréquence intermédiaire nulle possédant une entrée apte à recevoir des signaux analogiques véhiculant des informations numériques codées par une modulation numérique, par exemple des signaux de télévision par satellite, composés de plusieurs canaux s'étendant sur une plage de fréquences prédéterminées, un bloc analogique comportant un étage de transposition de fréquence suivi d'un étage de filtrage analogique pour sélectionner un canal désiré et délivrer deux signaux analogiques en bande de base en quadrature de phase contenant les informations véhiculées par le canal sélectionné et des informations dites de canaux adjacents, et un étage de conversion analogique/numérique relié à la sortie du bloc analogique, et

- un module numérique de décodage de canal, relié à la sortie de l'étage de conversion analogique/numérique, comportant un étage de démodulation, un étage de filtrage numérique pour éliminer lesdites informations de canaux adjacents, et un étage de correction d'erreurs pour délivrer un flux de paquets de données (flux MPEG, par exemple) correspondant aux informations véhiculées par le canal désiré.

L'intégration du composant selon l'invention a notamment été possible par l'utilisation d'un filtrage global en deux étapes, à savoir un préfiltrage analogique relativement "mou", (c'est-à-dire sélectionnant le canal désiré mais laissant passer des informations dites de canaux adjacents, qui généralement sont des informations relatives au canal immédiatement adjacent de celui désiré) suivi d'un filtrage numérique de Nyquist éliminant ces informations de canaux adjacents.

Ainsi, selon un mode de réalisation de l'invention, l'étage de filtrage analogique possède une fréquence de coupure haute supérieure de 20% environ à la demi-largeur fréquentielle d'un canal. Par ailleurs, la fréquence d'échantillonnage de l'étage de conversion analogique/numérique est choisie supérieure à environ 2,5 fois la fréquence de coupure haute de l'étage de filtrage analogique et la fréquence de coupure de l'étage de filtrage numérique est égale quant à elle à la demi-largeur fréquentielle d'un canal.

Par ailleurs, selon un mode de réalisation de l'invention, la fréquence d'échantillonnage de l'étage de conversion analogique/numérique est réglable en fonction de la fréquence centrale Fd du canal sélectionné, de façon à repousser les harmoniques de la fréquence d'échantillonnage en-dehors de la plage de fréquence [Fd-F2 ; Fd+F2], où F2 désigne la fréquence de coupure haute de l'étage de filtrage analogique.

Selon un mode de réalisation de l'invention, le composant comporte une plaque métallique collée sur la surface arrière du substrat d'une colle conductrice, cette plaque métallique étant destinée à être liée à la masse. Ainsi, la capacité, de valeur relativement élevée, réalisée entre le substrat semiconducteur et la plaque métallique, permet d'absorber les pics de courant à haute fréquence.

Par ailleurs, il est également particulièrement avantageux que les éléments effectuant un traitement numérique soient disposés dans une partie du substrat isolée de la partie restante du substrat par une barrière semiconductrice ayant un type de conductivité différent du type de conductivité du substrat. En d'autres termes, on utilise ici une technologie dite "triple caisson" ("triple well", en langue anglaise). Ceci permet, lorsque la barrière semiconductrice est polarisée par une tension de polarisation différente de celle alimentant les transistors situés dans la partie isolée du substrat, d'éviter que du bruit sur la tension d'alimentation des transistors soit transmis directement via le substrat sur le filtre analogique en bande de base.

Par ailleurs, afin de minimiser, voire de supprimer toutes sources de bruit provenant du fonctionnement des transistors (bruits en 1/f notamment), l'étage de filtrage analogique est avantageusement un étage de filtrage passe-bande dont la fréquence de coupure basse a une valeur prédéterminée supérieure à zéro, par exemple choisie de l'ordre de 500 KHz à 1 MHz. Le composant comporte alors des moyens de génération commandables (synthétiseur de fréquence par exemple) aptes à délivrer un signal de mélange à l'étage de transposition de fréquence, la fréquence de ce signal de mélange étant inférieure à la fréquence centrale du canal désirée, d'une valeur de décalage choisie au moins égale à la valeur de fréquence de coupure basse du filtre analogique.

Par ailleurs, l'étage de démodulation comporte des moyens de correction aptes à corriger le bruit de phase et la dérive en fréquence des moyens de génération et à compenser le filtrage passe-bande. En d'autres termes, l'algorithme de dérotation, selon une dénomination bien connue de l'homme du métier, qui est habituellement utilisé pour corriger le bruit de phase et la dérive en fréquence des moyens de génération (synthétiseur de fréquence) permet également de compenser la présence du filtrage passe-bande.

Selon un mode de réalisation de l'invention, le bloc analogique du module de synthonisation comporte un premier étage atténuateur/amplificateur à gain commandé, connecté entre l'entrée de signal et l'étage de transposition de fréquence. Par ailleurs, le module de synthonisation comporte un bloc numérique connecté au bloc analogique par l'étage de conversion analogique/numérique.

Le module de synthonisation comporte

- des premiers moyens de calcul aptes dans une phase d'initialisation, à calculer la puissance globale moyenne de l'intégralité du signal reçu par le synthonisateur,
- des premiers moyens de comparaison, incorporés dans le bloc numérique, aptes à comparer cette puissance globale calculée avec une première valeur de référence prédéterminée correspondant à une puissance maximale souhaitée en un endroit prédéterminé du bloc analogique,
- des premiers moyens de réglage aptes à régler le gain du premier étage atténuateur/amplificateur en fonction du résultat de ladite comparaison jusqu'à minimiser l'écart entre la puissance globale calculée et ladite valeur de référence.

Et, dans une phase de fonctionnement normal dans laquelle un canal est sélectionné, le gain du premier étage atténuateur/amplificateur est figé.

D'une façon générale, on peut calculer la puissance globale moyenne de l'intégralité du signal reçu par le synthonisateur à partir de tout signal disponible dans le bloc analogique du synthonisateur en amont du premier filtre de ce bloc analogique. Ainsi, lorsque les mélangeurs de l'étage de transposition de fréquence ne sont pas équipés de filtres, le premier filtre rencontré dans le bloc analogique est le filtre en bande de base. On pourra donc dans ce cas utiliser tout signal pris en amont de ce filtre bande de base. Ceci étant, généralement les mélangeurs utilisés dans un étage de transposition de fréquence d'un synthonisateur comportent intrinsèquement un filtre. Dans ce cas, une analyse de la puissance globale du signal reçu est réalisée avant les mélangeurs, ces éléments étant les derniers de la chaîne de réception analogique recevant l'ensemble de la puissance de différents canaux. Ceci étant, il est préférable, en particulier pour des raisons de conception du circuit intégré, d'utiliser le signal disponible entre la sortie du premier étage atténuateur/amplificateur et l'entrée de l'étage de transposition de fréquence. Il serait également possible d'équiper le premier étage atténuateur/amplificateur de moyens de filtrage supplémentaires pour atténuer encore la puissance de signal, si nécessaire.

Selon une mise en oeuvre de l'invention, le calcul de la puissance globale moyenne de l'intégralité du signal reçu est effectué dans le bloc numérique du synthonisateur, c'est-à-dire en aval de l'étage de conversion analogique/numérique. Ce calcul de la puissance globale moyenne comporte alors par exemple un calcul du module du signal échantillonné ainsi qu'une intégration numérique sur un certain nombre d'échantillons, typiquement $2^{21}$. Ceci étant, il serait possible en variante de prévoir un filtre analogique intégrateur dans le bloc analogique destiné à effectuer la moyenne du signal analogique à partir duquel on souhaite calculer la puissance globale moyenne. Puis, le signal de sortie du filtre (tension), représentatif de la puissance moyenne globale du signal reçu, serait alors échantillonné dans l'étage de conversion analogique/numérique. En théorie, il ne serait alors nécessaire d'utiliser qu'un seul échantillon pour effectuer la comparaison avec la valeur de référence. Mais, en pratique, on effectuerait cette comparaison avec une valeur moyenne calculée sur un nombre très limité d'échantillons, par exemple trois ou quatre.

Selon un mode de réalisation préférentiel de l'invention, le bloc analogique du synthonisateur comporte en outre un deuxième étage amplificateur à gain commandé, connecté en aval de l'étage de filtrage analogique. Le module de synthonisation comprend également

- des deuxièmes moyens de calcul, connectés à la sortie de l'étage de filtrage analogique, aptes à calculer dans la phase de fonctionnement normal la puissance moyenne du canal sélectionné,
des deuxièmes moyens de comparaison, incorporés dans le bloc numérique, aptes à comparer cette puissance moyenne de canal calculée avec une deuxième valeur de référence prédéterminée correspondant à une puissance de canal maximale souhaitée à l'entrée de l'étage de conversion analogique/numérique, et
des deuxièmes moyens de réglage aptes à régler le gain du deuxième étage amplificateur jusqu'à minimiser l'écart entre la puissance de canal calculée et ladite deuxième valeur de référence.

En d'autres termes, après la phase d'initialisation, le signal est commuté vers les mélangeurs de l'étage de transposition de fréquence, et le deuxième étage d'amplification à gain commandé, intégré au filtre de bande de base, permet de régler de façon fine le niveau à l'entrée du convertisseur de façon à avoir une puissance correspondant au maximum de dynamique de l'étage de conversion analogique/numérique.

Le fait, selon l'invention, de calculer dans une phase d'initialisation la puissance globale du signal reçu et de régler le gain du premier étage atténuateur/amplificateur à gain commandé, puis d'ajuster le gain du deuxième étage amplificateur dans la phase de fonctionnement normal, permet un meilleur équilibrage entre la commande des gains des deux étages amplificateurs à gain commandé.

En effet, dans les solutions de l'art antérieur, prévoyant des filtres externes de type large bande, à composants discrets, commandables en fonction de la sélection du canal désirée, il n'y a pas de phase d'initialisation dans laquelle on calcule la puissance globale de l'intégralité du signal reçu. La puissance du signal est en effet calculée à la sortie du bloc analogique, après conversion analogique/numérique, sur un signal filtré comportant outre le canal sélectionné, les canaux immédiatement adjacents. Et, c'est à partir de ce seul calcul de puissance que l'on règle les gains des différents étages d'amplification à gain commandé. Or, l'inconvénient de cette solution réside dans le fait que l'on ne possède alors qu'une seule source d'information concernant la puissance de réception sur le synthonisateur et que cette information est située à la sortie de la chaîne analogique. Et, cette information est déjà filtrée et ne possède donc qu'une partie du signal d'entrée, à savoir le canal désiré et éventuellement les canaux adjacents. La précision de réglage des différents amplificateurs à gain commandé est donc moins précise que celle utilisée dans la présente invention qui utilise deux calculs de puissance différents, dans la phase d'initialisation et dans la phase de fonctionnement normal, pour régler de façon indépendante les gains des deux étages d'amplification à gain commandé.

En outre, si l'on suppose maintenant qu'un pic de réception parasite se situe au voisinage du canal sélectionné, celui-ci va influer fortement dans le calcul de la puissance effectuée en bout de chaîne analogique dans les solutions de l'art antérieur. En conséquence, le gain du premier étage amplificateur va avoir tendance à être minimisé pour éviter une saturation des éléments suivants, ce qui va conduire à une augmentation du gain du deuxième étage amplificateur de façon à obtenir le maximum de dynamique à l'entrée de l'étage de conversion analogique/numérique.

Par contre, selon l'invention, la puissance du pic parasite est "diluée" dans la puissance globale du signal reçu. Ceci va conduire, dans la phase d'initialisation, à régler le premier étage amplificateur avec un gain un peu plus élevé que dans l'art antérieur. De ce fait, dans la phase de fonctionnement normal, le calcul de la puissance de canal effectué en sortie de la chaîne analogique va conduire à régler le gain du deuxième étage amplificateur avec un gain plus faible que dans l'art antérieur. On obtient donc une plus grande marge de manoeuvre sur le réglage de gain du deuxième amplificateur et également un meilleur équilibrage dans la commande des gains.

L'invention a également pour objet un récepteur de signaux de télévision numérique par satellite, comprenant au moins un composant électronique tel que défini ci-avant.

D'autres avantages et caractéristiques de l'invention apparaîtront à l'examen de la description détaillée de modes de réalisation nullement limitatifs et des dessins annexés, sur lesquels :

- la figure 1 est un synoptique schématique de la structure interne d'un composant électronique selon l'invention;
- la figure 2 illustre plus particulièrement l'architecture interne du module de synthonisation de fréquence du composant électronique de la figure 1;
- les figures 3, 4 et 4a illustrent schématiquement des diagrammes fréquentiels de canaux avant et après filtrage;
- la figure 5 illustre plus particulièrement mais toujours schématiquement un module de décodage de canal du composant de la figure 1;
- la figure 6 est un organigramme schématique des principales étapes d'une commande du fonctionnement du module de synthonisation de fréquence; et
- la figure 7 illustre schématiquement une réalisation technologique d'un composant selon l'invention.

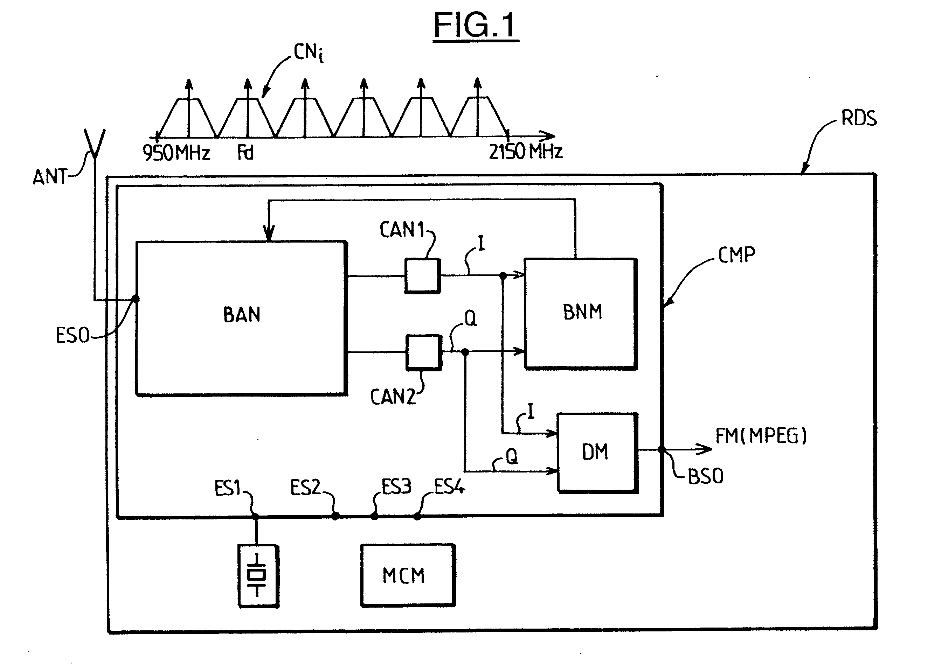

Sur la figure 1, la référence RDS désigne un récepteur/décodeur satellite ("Set-top box" en langue anglaise) connecté à une antenne parabolique ANT captant des signaux de télévision numérique, et destiné à recevoir et à décoder ces signaux.

Ce récepteur RDS comporte en tête, un composant électronique CMP destiné à recevoir l'ensemble des canaux $CN_i$ présents dans le signal reçu à l'entrée de signal ES0 de ce composant, et à délivrer à la sortie BS0 un flux FM de données MPEG. Ce composant CMP est entièrement réalisé de façon intégrée en technologie CMOS sur un substrat monolythique de silicium. Le circuit intégré sera ensuite encapsulé de façon classique dans un boîtier pour être fixé, par exemple par soudure, sur une carte électronique.

Le composant CMP comporte en tête un dispositif de synthonisation ou "tuner" TZ, destiné à sélectionner le canal désiré parmi l'ensemble des canaux $CN_i$ présents dans le signal reçu à l'entrée de signal ES0 qui est également l'entrée du tuner.

Ce tuner, qui comporte, comme on le verra plus en détail ci-après, un bloc analogique BAN et un bloc numérique BNM, est du type à fréquence intermédiaire nulle.

Les blocs analogique BAN et numérique BNM du tuner sont séparés par un étage de conversion analogique/numérique CAN1, CAN2.

Par ailleurs, le composant CMP comporte un module numérique de décodage de canal DM, relié à la sortie de l'étage de conversion analogique/numérique qui délivre le flux de paquets de données FM correspondant aux informations véhiculées par le canal désiré, c'est-à-dire sélectionné par le tuner.

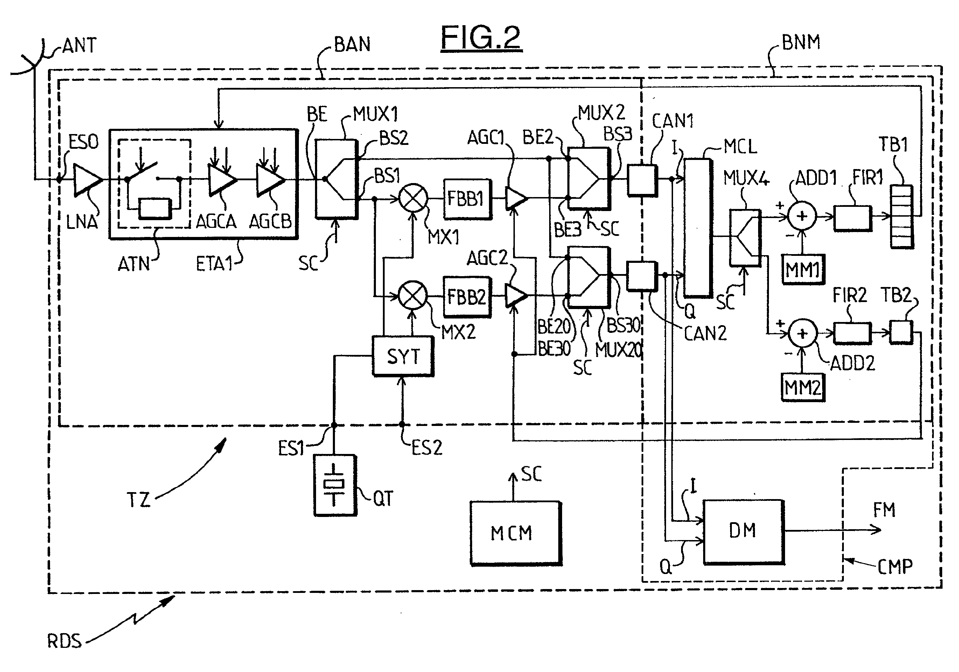

Si l'on se réfère maintenant plus particulièrement à la figure 2, on voit que le tuner TZ est, comme déjà mentionné, du type à fréquence intermédiaire nulle, c'est-à-dire qu'il n'effectue pas de transposition de fréquence à une fréquence intermédiaire mais ne comporte qu'un seul étage de transposition de fréquence, comportant ici les mélangeurs MX1 et MX2, et transposant directement le signal au voisinage de la bande de base d'un canal. En d'autres termes, l'étage de transposition de fréquence délivre directement le canal sélectionné ainsi que les canaux immédiatement adjacents.

Le tuner TZ comporte en tête, un amplificateur faible bruit LNA connecté à l'entrée de signal ES0 et ayant par exemple un gain de 15 dB. L'amplificateur LNA est suivi d'un premier étage ETA1 atténuateur/amplificateur à gain commandé. Plus précisément, cet étage ETA1 comporte un bloc atténuateur ATN commandable, que l'on a représenté schématiquement sur la figure 2 par un interrupteur shuntant ou non l'atténuateur proprement dit. Cet atténuateur permet, lorsqu'il est actionné, une atténuation de signal de -20 dB par exemple.

L'étage ETA1 comporte également, à la suite de ce bloc atténuateur ATN, deux amplificateurs à gain commandé AGCA et AGCB. Le gain de chaque amplificateur AGCA ou AGCB peut être réglé, par exemple entre trois valeurs discrètes, à savoir les valeurs 0 dB, 6 dB et 12 dB, par exemple. Le gain total du bloc amplificateur composé des deux amplificateurs AGCA et AGCD, peut donc être commandé de façon à prendre les valeurs 0 dB, 6 dB, 12 dB, 18 dB ou 24 dB.

La sortie de l'étage ETA1 est connectée à la borne d'entrée BE d'un moyen d'aiguillage de signal formé ici d'un multiplexeur MUX1 commandé par un signal de commande SC. Ce multiplexeur MUX1 comporte une première borne de sortie BS1 reliée aux deux mélangeurs MX1 et MX2 de l'étage de transposition de fréquence.

Ces deux mélangeurs MX1 et MX2 reçoivent par ailleurs, de façon classique, deux signaux de mélange en quadrature issus par exemple d'un synthétiseur de fréquence SYT. La fréquence de chacun des deux signaux de mélange est identique et correspond sensiblement à la fréquence du canal sélectionné. Le synthétiseur de fréquence SYT est commandé par un signal de sélection émanant d'une entrée de sélection ES2 connectée à un bus I$^2$C selon une dénomination connue de l'homme du métier. Par ailleurs, le synthétiseur de fréquence est piloté par un signal d'horloge de référence reçu sur une entrée ES1 et provenant d'un quartz QT.

Les deux voies de traitement, connectées aux sorties des deux mélangeurs MX1 et MX2 sont des voies en quadrature, respectivement dénommées I et Q selon une dénomination usuelle connue de l'homme du métier. La voie I représente le signal en phase, tandis que la voie Q représente le signal en quadrature.

Comme illustré sur la figure 1, le signal reçu au niveau de l'entrée ES0 est formé de plusieurs canaux $CN_i$ situés dans la bande de fréquence 950-2150 MHz. Les fréquences centrales Fd de ces canaux sont mutuellement espacées de 45 MHz.

Les mélangeurs MX1 et MX2 sont équipés en sortie de filtres passe-bas, dont la fréquence de coupure est de l'ordre de 150 à 250 MHz. Le signal de sortie des deux mélangeurs MX1 et MX2 est donc un signal centré autour de la fréquence 0 MHz, s'étendant sur une bande de fréquence de 150 à 250 MHz et comportant le canal sélectionné ainsi que les canaux immédiatement adjacents.

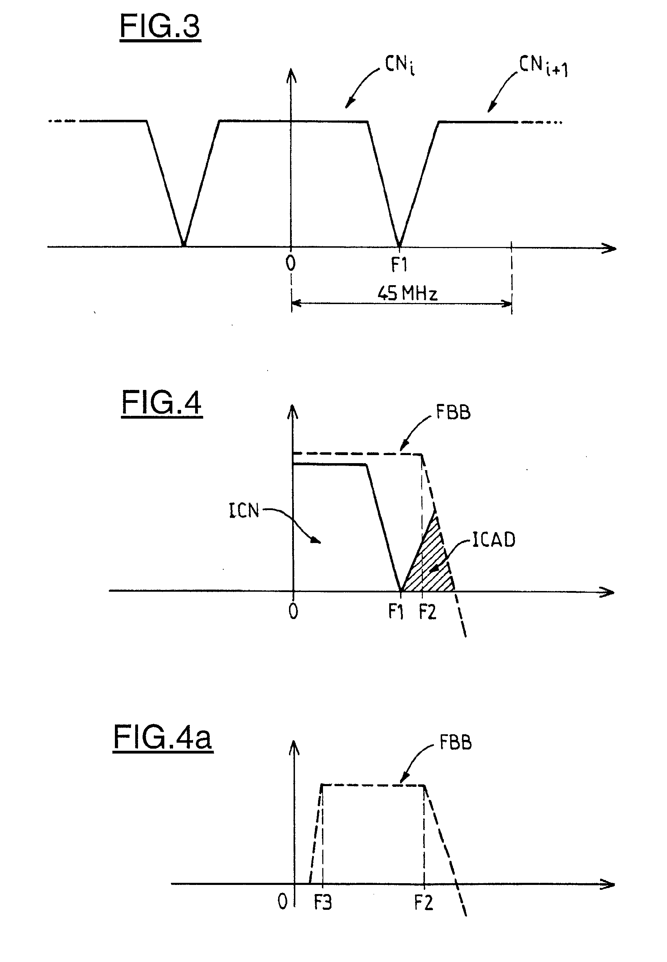

La figure 3 illustre, à des fins de simplification, le canal sélectionné $CN_i$ et le canal immédiatement adjacent $CN_{i+1}$. Sur cette figure, la fréquence F1, égale à 30 MHz, représente la demi-largeur fréquentielle du canal $CN_i$. L'homme du métier sait que cette demi-largeur fréquentielle F1 correspond en fait à la demi-largeur fréquentielle théorique d'un canal (par exemple 22,5 MHz) multipliée par un coefficient connu sous la dénomination anglosaxonne de "roll off", et qui est par exemple égal à 1,35.

Les deux filtres en bande de base FBB1 et FBB2, qui suivent les deux mélangeurs MX1 et MX2, ont une fréquence de coupure haute égale à F2 (figure 4). Selon l'invention, cette fréquence F2 est choisie pour être supérieure d'au moins 20% à la demi-largeur fréquentielle F1 du canal $CN_i$. A titre indicatif, on pourra par exemple choisir une fréquence de coupure haute F2 de chaque filtre en bande de base FBB égale à 40 MHz. Ainsi, on retrouve en sortie de ces deux filtres en bande de base FBB1 et FBB2 un signal filtré comportant des informations ICN véhiculées par le canal sélectionné (figure 4) et des informations ICAD dites de canaux adjacents, et comportant en pratique essentiellement des informations relatives au canal immédiatement adjacent à celui qui est sélectionné.

L'homme du métier aura par conséquent remarqué que ce filtre analogique, qui est par exemple un filtre d'ordre 6, est un filtre relativement mou, en ce sens qu'il laisse passer des informations de canaux adjacents. Cependant, l'utilisation d'un filtre analogique mou permet une intégration aisée de celui-ci sur silicium. On verra par ailleurs, plus en détail ci-après, que le filtrage global, qui comporte ici une première étape analogique réalisée par le filtrage FBB, est en fait complété par un filtre numérique de Nyquist qui va éliminer les informations de canaux adjacents.

Par ailleurs, bien qu'il soit tout à fait possible d'utiliser un filtre en bande de base qui soit un filtre passe-bas, comme représenté sur la figure 4, il est toutefois préférable d'utiliser comme filtre en bande de base FBB un filtre passe-bande comme illustré sur la figure 4a. Dans ce cas, le filtre passe-bande FBB présente une fréquence de coupure basse F3 qui est décalée par rapport à zéro d'une valeur de décalage prédéterminée, par exemple de l'ordre de 500 KHz à 1 MHz. Dans ce cas, on choisira alors comme fréquence des signaux de mélange non pas la fréquence du canal sélectionné, comme ce serait le cas pour un filtre en bande de base passe-bas, mais une fréquence inférieure à la fréquence centrale Fd du canal désiré. Et, plus précisément, la fréquence du signal de mélange serait inférieure à la fréquence centrale d'une valeur de décalage choisie au moins égale à la valeur de la fréquence de coupure basse F3 du filtre analogique FBB. Le choix de fréquence du signal de mélange dépend également notamment du débit des informations.

Le choix d'un filtre en bande de base passe-bande est particulièrement avantageux en ce sens qu'il permet de minimiser, voire de supprimer la source de bruit provenant du fonctionnement des transistors, source de bruit qui est une source en 1/f. En d'autres termes, on ne fait pas passer la composante continue dans le traitement analogique.

Si l'on se réfère à nouveau à la figure 2, on voit que les deux filtres en bande de base sont suivis d'un deuxième étage d'amplification à gain commandé formé ici de deux amplificateurs à gain commandé AGC1 et AGC2. Les sorties des deux amplificateurs AGC1 et AGC2 sont respectivement connectées aux bornes d'entrée BE3 et BE30 de deux autres multiplexeurs MUX2 et MUX20 également commandés par le signal de commande SC.

Le multiplexeur MUX1 comporte également une deuxième borne de sortie BS2 directement connectée aux deux autres bornes d'entrée BE2 et BE20 des deux autres multiplexeurs MUX2 et MUX20. Cette voie de connexion directe shunte donc tout moyen de filtrage du signal global, en l'espèce les filtres présents à l'entrée des mélangeurs MX1 et MX2 ainsi que les filtres en bande de base FBB 1 et FBB2. Cette connexion directe va permettre, comme on le verra plus en détail ci-après, de calculer la puissance globale de l'intégralité du signal reçu.

Les deux bornes de sortie BS3 et BS30 de deux multiplexeurs MUX2 et MUX20 sont respectivement connectées aux deux entrées de deux convertisseurs analogiques numériques CAN1 et CAN2 destinés à échantillonner les signaux analogiques reçus à leur entrée à une fréquence d'échantillonnage réglable. Ces deux convertisseurs analogiques/numériques CAN1 et CAN2 marquent la frontière entre le bloc analogique BAN du tuner BZ et le bloc numérique BNM de ce tuner.

Selon l'invention, la fréquence d'échantillonnage de l'étage de conversion analogique/numérique est supérieure à environ 2,5 fois la fréquence de coupure haute F2 de l'étage de filtrage analogique FBB1, FBB2.

Par ailleurs, toujours dans le but de minimiser les interférences entre la partie numérique du composant CMP et la partie analogique, il est préférable que la fréquence d'échantillonnage des convertisseurs CAN1 et CAN2 soit réglable en fonction de la fréquence centrale Fd du canal sélectionné, de façon à repousser les harmoniques de la fréquence d'échantillonnage en-dehors de la plage de fréquence [Fd-F2 ; Fd+F2].

En pratique, le récepteur RDS comporte des moyens de commande MCM, par exemple réalisés de façon câblée ou bien au sein d'un microcontrôleur, qui comportent une table de correspondance entre la fréquence centrale du canal sélectionné et une fréquence d'échantillonnage qui permet de respecter la contrainte vis-à-vis de la fréquence de coupure haute F2 et la contrainte vis-à-vis des harmoniques de fréquence. Cette fréquence d'échantillonnage est par exemple délivrée sur l'entrée ES3 de composant, également connectée à un bus I2C (figure 1). Par ailleurs, le moyen de commande MCM permet également de délivrer notamment le signal de commande SC (entrée ES4) permettant de commuter les différents multiplexeurs du tuner.

Avant de décrire plus en détail l'architecture interne du module numérique DM, on va décrire maintenant plus en détail l'architecture interne du bloc numérique BNM du tuner TZ.

Les deux signaux numériques en quadrature I et Q délivrés par les convertisseurs analogiques numériques sont traités dans un bloc de calcul MCL qui va déterminer la puissance de ce signal (I, Q) en en calculant par exemple le module. Une façon simplifiée de calculer le module du signal dans le bloc MCL est fournie par la formule (1) ci-dessous :

$$\text{Module (I, Q)} = \text{Max (abs (I), abs (Q))} + 1/2 \text{ Min (abs (I), abs (Q))} \qquad (1)$$

Dans cette formule, Max désigne la valeur maximale, Min désigne la valeur minimale et abs désigne la valeur absolue.

Comme on le verra plus en détail ci-après, selon les phases de fonctionnement du tuner, la borne d'entrée du multiplexeur MUX1 peut être connectée soit sur sa première borne de sortie BS1, soit sur sa deuxième borne de sortie BS2. De même, les bornes de sortie BS3 et BS30 des multiplexeurs MUX2 et MUX20 peuvent être corrélativement reliées aux bornes de sortie BE2 et BE20 ou BE3 et BE30. Lorsqu'une connexion directe est effectuée entre la sortie de l'étage ETA1 et les convertisseurs analogiques numériques CAN1 et CAN2, les deux signaux I et Q sont en fait des signaux identiques et non en quadrature. La formule (1) ci-dessus du calcul du module se simplifie donc et devient la formule (2) ci-dessous dans laquelle S désigne le signal délivré par la borne de sortie BS2 du multiplexeur MUX1.

$$\text{Module (S)} = \text{Max (abs (S))} + 1/2 \text{ Min (abs (S))} \qquad (2)$$

Par contre, lorsque la sortie de l'étage ETA1 est connectée au convertisseur CAN1 et CAN2 par l'intermédiaire de l'étage de transposition de fréquence et des filtres en bande de base, les deux signaux I et Q sont bien deux signaux en quadrature.

La sortie du bloc de calcul MCL est reliée à un multiplexeur MUX4 dont l'une des sorties est reliée à un soustracteur ADD1 et dont l'autre sortie est reliée à un soustracteur ADD2.

Lorsque l'on souhaite calculer la puissance globale moyenne de l'intégralité du signal reçu, le multiplexeur MUX4 est commandé de façon à délivrer le signal issu du bloc de calcul MCL au soustracteur ADD1. Ce soustracteur ADD1 reçoit par ailleurs sur sa deuxième entrée une première valeur de référence, stockée par exemple dans un registre ou une mémoire MM1. Cette première valeur de référence correspond à une puissance maximale souhaitée en un endroit prédéterminé du bloc analogique, par exemple à l'entrée des mélangeurs de l'étage de transposition de fréquence. A titre indicatif, on pourra par exemple fixer cette première valeur de référence à -10 dBm, ce qui permet d'éviter ainsi une saturation des éléments du bloc analogique.

Chaque échantillon délivré par le bloc de calcul MCL est représentatif en fait de la puissance instantanée du signal reçu à l'entrée de ce bloc MCL. Le soustracteur ADD1 compare en fait la puissance instantanée de chaque échantillon avec la première valeur de référence. Ces valeurs de comparaison successives sont ensuite temporellement intégrées dans un intégrateur à coefficients programmables FIR1.

A titre indicatif, l'intégration est effectuée sur une fenêtre glissante de $2^{21}$ échantillons et la sortie de l'intégrateur fournit donc l'écart entre la puissance globale moyenne de l'intégralité du signal reçu et la première valeur de référence. Ceci étant, il serait également possible d'effectuer l'intégration en sortie du bloc MCL afin de calculer la puissance moyenne du signal global, puis de soustraire de cette valeur moyenne la valeur de référence. Le soustracteur serait dans ce cas disposé en aval de l'intégrateur.

La sortie de l'intégrateur FIR1 est ensuite délivrée à des moyens de réglage du gain de l'étage ETA1. Ces moyens de réglage comportent par exemple une table de référence qui est décodée par la sortie de l'intégrateur et qui va délivrer un mot numérique dont la valeur va permettre de commander l'interrupteur du bloc atténuateur ATN et de fixer les gains des deux amplificateurs AGCA et AGCB.

Lorsque l'entrée du multiplexeur MUX4 est connectée sur son autre sortie, c'est-à-dire celle reliée au soustracteur ADD2, il va être possible de calculer la puissance moyenne du canal sélectionné et de régler le gain des deux amplificateurs à gain commandé AGC1 et AGC2. A cet égard, un registre ou mémoire MM2 contient une deuxième valeur de référence correspondant à une puissance de canal maximale souhaitée à l'entrée de l'étage de conversion analogique/numérique de façon à obtenir le maximum de dynamique à l'entrée de cet étage. A titre indicatif, cette deuxième valeur de référence peut être prise égale à 7 dB. Le soustracteur ADD2 calcule alors l'écart entre la puissance instantanée de chaque échantillon du canal sélectionné et cette deuxième valeur de référence. Ces écarts sont ensuite intégrés dans un intégrateur FIR2 ayant une structure analogue à celle décrite pour l'intégrateur FIR1. De même, par analogie à ce qui a été décrit ci-avant pour l'intégrateur FIR1, l'intégrateur FIR2 décode une deuxième table de référence TB2 qui permet de régler le gain des amplificateurs AGC1 et AGC2.

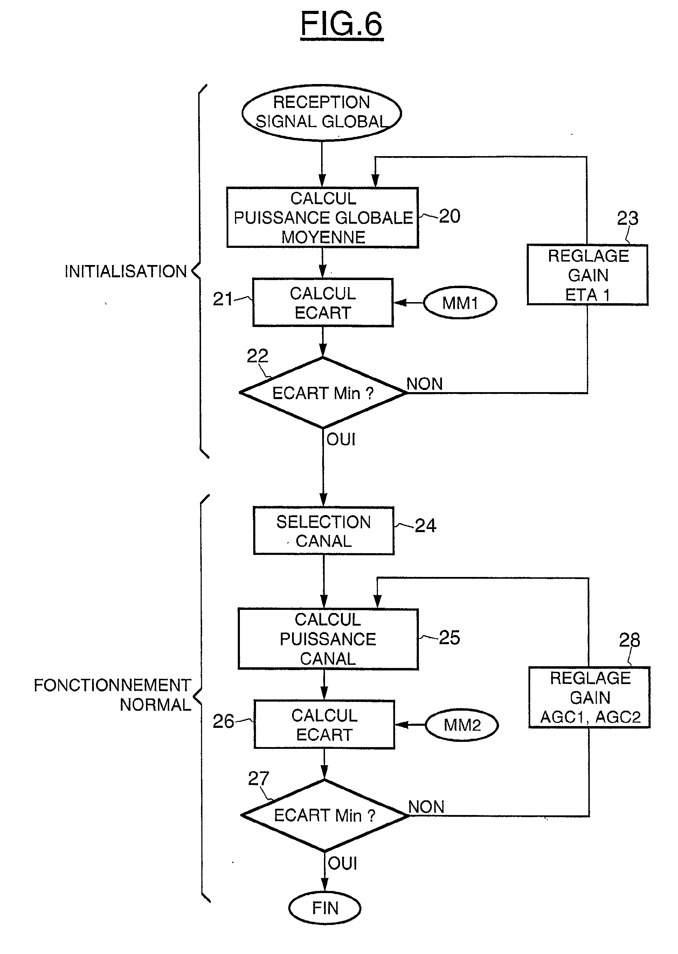

On va maintenant décrire plus en détail le fonctionnement du tuner selon l'invention, en se référant plus particulièrement à la figure 6.

A la mise en marche du tuner, ou lors d'un changement de canal, les moyens de commande MCM positionnent les multiplexeurs MUX1, MUX2 et MUX20 de façon à permettre une connexion directe entre la sortie de l'étage d'amplification ETA1 et les convertisseurs analogique/numérique. De même, le multiplexeur MUX4 est positionné de façon à relier le bloc MCL à l'additionneur ADD1.

Une phase d'initialisation du tuner débute alors. Au début de cette phase d'initialisation, l'interrupteur du bloc atténuateur ATN est ouvert par défaut, activant l'atténuateur proprement dit et les gains des amplificateurs AGCA et AGCB sont par défaut fixés à zéro. L'intégralité du signal reçu à l'entrée du signal ESO est amplifiée dans l'amplificateur LNA, puis atténuée dans l'étage ETA1 et convertie ensuite dans les convertisseurs analogique/numérique CAN1 et CAN2. La puissance globale moyenne du signal est ensuite déterminée comme expliqué ci-avant et la sortie du filtre FIR1, représentatif de l'écart entre cette puissance globale moyenne et la valeur de référence contenue dans le registre MM1, décode la table TB1, ce qui provoque le réajustement du gain de l'étage ETA1. (Etapes 20, 21 et 23). En fait, le réajustement ne s'effectue que si l'écart entre cette puissance globale moyenne et la valeur de référence contenue dans le registre MM1 peut être minimisé (étape 22), compte tenu des possibilités d'ajustement du gain fournies par l'étage ETA1.

Plus précisément, à titre d'exemple, si l'on suppose que la puissance du signal reçu à l'entrée ES0 est égale à -5 dBm, la puissance du signal après amplification dans l'amplificateur LNA ayant un gain de 15 dB, est égale à +10 dBm. Après passage dans l'atténuateur ATN et dans les amplificateurs AGCA et AGCB réglés initialement avec un gain nul, la puissance globale moyenne du signal à la sortie de l'étage ETA1 est égale à -10 dBm. Cette puissance sera calculée dans le bloc numérique et comparée à la première valeur de référence qui est justement égale à -10 dBm. Dans ce cas, l'écart est nul et par conséquent minimal. La phase d'initialisation se termine alors et les commandes de gain et d'atténuation de l'étage ETA1 ne sont pas alors modifiées.

Si, par contre, la puissance du signal reçu à l'entrée ES0 est égale à -20 dBm, la puissance du signal à la sortie de l'étage ETA1 est égale à -25 dBm. L'écart calculé entre cette puissance globale moyenne et la première valeur de référence est alors égal à -15 dBm. Dans ce cas, les moyens de réglage du gain de l'étage ETA1 peuvent par exemple directement régler les gains des deux amplificateurs AGCA de façon à conférer un gain total de 12 dB, ce qui va conduire à l'obtention d'une puissance de signal en sortie de l'étage ETA1 égale à -13 dBm. Compte tenu des possibilités de réglage par palier des amplificateurs AGCA et AGCB, l'écart de -3 dB entre cette valeur et la première valeur de référence est considéré comme l'écart minimal. La phase d'initialisation est par conséquent terminée.

En variante, il aura été possible d'effectuer deux cycles de réglage successifs en augmentant deux fois de suite par pas de 6 dB, le gain de l'étage ETA1.

A la fin de la phase d'initialisation, le tuner rentre dans une phase de fonctionnement normal, dans laquelle les moyens de commande MCM délivrent un signal de commande SC positionnant les multiplexeurs sur leur autre voie. Au cours de cette phase de fonctionnement normal, on sélectionne le canal désiré (étape 24) et la puissance de canal est calculée d'une façon analogue à celle qui a été décrite ci-avant dans le bloc MCL (étape 25), puis comparée et moyennée à l'aide du soustracteur ADD2, de l'intégrateur FIR2 et de la deuxième valeur de référence stockée dans la mémoire MM2 (étape 26). Le décodage de la table TB2 permet le réglage plus fin des amplificateurs AGC1 et AGC2. Il convient de noter ici que, alors que dans cette phase de fonctionnement normal, le gain de l'étage ETA1 est figé, le gain des amplificateurs AGC1 et AGC2 est constamment réajusté (étape 28) tant que l'écart calculé n'est pas considéré comme minimal (étape 27).

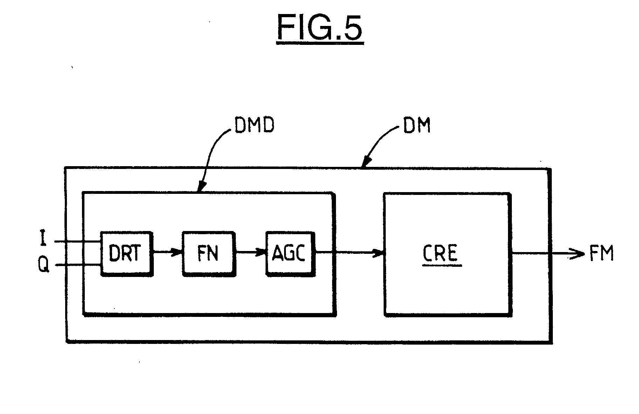

Si l'on se réfère maintenant de nouveau plus particulièrement aux figures 1, 2 et 5, on voit que le récepteur RDS comporte un module numérique de décodage de canal DM recevant les deux signaux I et Q et comportant un étage de démodulation DMD capable d'effectuer des traitements classiques de démodulation (tels qu'une démodulation QPSK ou 8PSK selon une dénomination bien connue de l'homme du métier), suivi d'un étage de correction d'erreur CRE effectuant des traitements classiques de décodage de Viterbi, un désentrelacement, un décodage de Reed-Solomon, un débrassage, de façon à délivrer le flux de paquets FM qui sera décodé dans un bloc de décodage de source externe au composant CMP, conforme à la norme MPEG par exemple.

L'étage de démodulation et de filtrage DMD comporte schématiquement en tête des moyens de correction DRT ("derotator" en langue anglaise) aptes à corriger le bruit de phase, la dérive en fréquence et le décalage en fréquence des synthétiseurs de fréquence. Les moyens de correction DRT sont également utilisés ici selon l'invention pour compenser le filtrage passe-bande FBB1, FBB2 et évitent ainsi d'obtenir une marge d'erreur trop faible pour l'interprétation de la constellation. De tels moyens de dérotation peuvent être par exemple ceux décrits dans la demande de brevet européen n° 0 481 543.

Le filtrage analogique est ici complété par un filtrage de Nyquist effectué dans un filtre numérique FN, dont la fréquence de coupure est égale à la demi-largeur fréquentielle F1 du canal désiré. Le filtre FN complète par conséquent le filtrage effectué par le filtre analogique FBB1, FBB2 et élimine les informations de canaux adjacents.

Un amplificateur à gain commandé AGC permet de recaler le niveau de puissance. Plus précisément, la valeur moyenne des signaux I et Q est mesurée après le filtre numérique et comparée à une valeur programmable, d'une façon analogue à ce qui est effectué pour le contrôle des amplificateurs AGC1 et AGC2. Le signal d'erreur intégré est ensuite appliqué à un multiplieur sur chaque voie I et Q.

L'étage de correction d'erreur CRE effectue ensuite les traitements classiques de correction d'erreur bien connus de l'homme du métier, sous la dénomination anglosaxonne de FEC (Forward Error Correction).

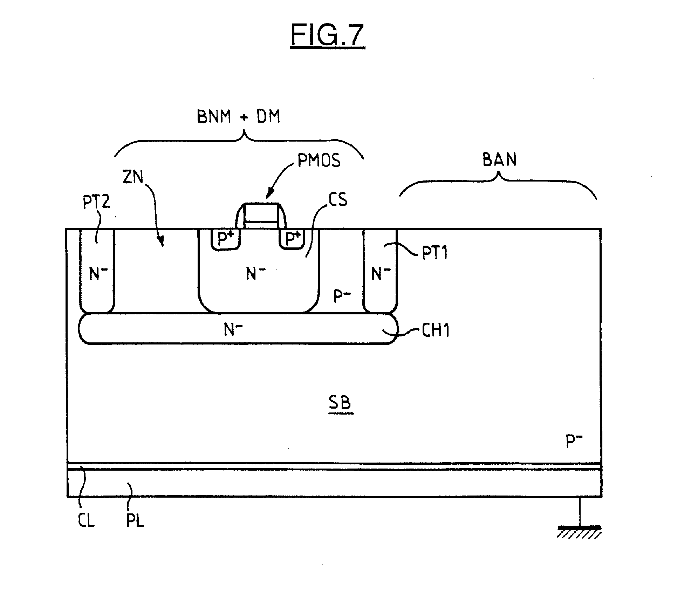

Technologiquement, le composant CMP selon l'invention est réalisé, par exemple en technologie CMOS 0,18 μm, sur un substrat monolythique SB en silicium, par exemple de type P$^-$ (figure 7).

Pour absorber les pics de courant à haute fréquence, il est préférable de coller au moyen d'une colle conductrice CL classique, une plaque métallique PL sur la face arrière du substrat SB. Cette plaque métallique est destinée à être reliée à la masse. La fine couche d'oxyde qui se forme naturellement sur le silicium du substrat forme le diélectrique d'un condensateur dont les deux électrodes sont respectivement formées par le substrat SB et la plaque métallique PL. Ce condensateur, dont la valeur capacitive est relativement importante, permet ainsi d'absorber les pics de courant à haute fréquence.

A titre indicatif, la surface du condensateur, qui correspond sensiblement à la surface de la puce, peut être de l'ordre de 17 mm$^2$.

Par ailleurs, la partie numérique du composant CMP, c'est-à-dire en l'espèce le bloc numérique BN et le module DM sont réalisés dans une zone ZN du substrat qui est isolée du reste du substrat (dans laquelle est réalisée la partie analogique BAN du composant) par une barrière semi-conductrice dopée N$^-$, formée ici d'une couche enterrée CH1 et de deux puits PT1 et PT2.

Par ailleurs, les transistors PMOS de la partie numérique sont réalisés au sein d'un caisson N$^-$ qui vient au contact de la couche enterrée CH1.

Et, afin d'éviter que le bruit sur la tension d'alimentation Vdd ne soit transmis via les caissons N$^-$ vers la partie analogique, pour venir directement perturber le filtrage en bande de base, il est avantageux de polariser tous les caissons N$^-$ avec une tension de polarisation différente de celle alimentant les transistors situés dans cette zone isolée ZN du substrat.

## Revendications

**1.** Composant électronique, comprenant un circuit intégré réalisé sur un substrat monolithique et incorporant

- un module de synthonisation (TZ) du type à fréquence intermédiaire nulle possédant une entrée (ESO) apte à recevoir des signaux analogiques véhiculant des informations numériques codées par une modulation numérique, par exemple des signaux de télévision numérique par satellite, composés de plusieurs canaux s'étendant sur une plage de fréquences prédéterminées, un bloc analogique (BAN) comportant un étage de transposition de fréquence suivi d'un étage de filtrage analogique (FBB1, FBB2) pour sélectionner un canal désiré et délivrer deux signaux analogiques en bande de base en quadrature de phase contenant les informations (ICN) véhiculées par le canal sélectionné et des informations dites de canaux adjacents (ICAD), et un étage de conversion analogique/numérique (CAN1, CAN2) relié à la sortie du bloc analogique, et
- un module numérique de décodage de canal (DM), relié à la sortie de l'étage de conversion analogique/numérique, comportant un étage de démodulation (DMD), un étage de filtrage numérique (FN) pour éliminer lesdites informations de canaux adjacents, et un étage de correction d'erreurs (CRE) pour délivrer un flux de paquets de données (FM) correspondant aux informations véhiculées par le canal désiré.

2. Composant selon la revendication 1, **caractérisé par le fait que** l'étage de filtrage analogique (FBB) possède une fréquence de coupure haute (F2) supérieure de 20% environ à la demi largeur fréquentielle (F1) d'un canal, **par le fait que** la fréquence d'échantillonnage de l'étage de conversion analogique/numérique est supérieure à environ 2,5 fois la fréquence de coupure haute de l'étage de filtrage analogique, et **par le fait que** la fréquence de coupure de l'étage de filtrage numérique est égale à la demi largeur fréquentielle d'un canal.

3. Composant selon la revendication 2, **caractérisé par le fait que** la fréquence d'échantillonnage de l'étage de conversion analogique/numérique est réglable en fonction de la fréquence centrale Fd du canal sélectionné, de façon à repousser les harmoniques de la fréquence d'échantillonnage en dehors de la plage de fréquences [Fd -F2 ; Fd + F2], où F2 désigne la fréquence de coupure haute de l'étage de filtrage analogique.

4. Composant selon l'une des revendications précédentes, **caractérisé par le fait qu'**il comporte une plaque métallique (PL) collée sur la face arrière du substrat par une colle conductrice, et destinée à être reliée à la masse.

5. Composant selon l'une des revendications précédentes, **caractérisé par le fait que** le substrat a un premier type de conductivité, **par le fait que** les éléments effectuant un traitement numérique sont disposés dans une partie (ZN) du substrat isolée de la partie restante du substrat par une barrière semiconductrice (CH1, CH2, PT2) ayant un deuxième type de conductivité différent du premier type de conductivité,
   et **par le fait que** ladite barrière semiconductrice est polarisée par une tension de polarisation différente de celle alimentant les transistors situés dans ladite partie isolée du substrat.

6. Composant selon l'une des revendications précédentes, **caractérisé par le fait que** l'étage de filtrage analogique est un étage de filtrage passe-bande dont la fréquence de coupure basse (F3) à une valeur prédéterminée supérieure à 0, **par le fait que** le composant comporte des moyens de génération commandables (SYT) aptes à délivrer un signal de mélange à l'étage de transposition de fréquence, **par le fait que** la fréquence du signal de mélange est inférieure à la fréquence centrale (Fd) du canal désiré, d'une valeur de décalage choisie au moins égale à la valeur de la fréquence de coupure basse du filtre analogique, et **par le fait que** l'étage de démodulation comporte des moyens de correction (DRT) aptes à corriger le bruit de phase, la dérive en fréquence et le décalage en fréquence des moyens de génération et à compenser le filtrage passe-bande.

7. Composant selon l'une des revendications précédentes, **caractérisé par le fait que** le bloc analogique (BAN) du module de synthonisation comporte un premier étage atténuateur/ amplificateur à gain commandé (ETA1) connecté entre l'entrée de signal et l'étage de transposition de fréquence, **par le fait que** le module de synthonisation comporte un bloc numérique (BNM) connecté au bloc analogique par l'étage de conversion analogique/numérique,
   **par le fait que** le module de synthonisation comporte des premiers moyens de calcul (MCL, FIR1) aptes dans une phase d'initialisation, à calculer la puissance globale moyenne de l'intégralité du signal reçu par le synthonisateur,
   des premiers moyens de comparaison (ADD1), incorporés dans le bloc numérique, aptes à comparer cette puissance globale calculée avec une première valeur de référence prédéterminée correspondant à une puissance maximale souhaitée en un endroit prédéterminé du bloc analogique,
   des premiers moyens de réglage (TB1) aptes à régler le gain du premier étage atténuateur/amplificateur en fonction du résultat de ladite comparaison jusqu'à minimiser l'écart entre la puissance globale calculée et ladite valeur de référence,
   et **par le fait que** dans une phase de fonctionnement normal dans laquelle un canal est sélectionnée, le gain du premier étage atténuateur/amplificateur est figé.

8. Composant selon la revendication 7, **caractérisé par le fait que** le bloc analogique du synthonisateur comporte en outre un deuxième étage amplificateur à gain commandé (AGC1, AGC2) connecté en aval de l'étage de filtrage analogique, **par le fait que** le module de synthonisation comprend également
   des deuxièmes moyens de calcul (MCL), connectés à la sortie de l'étage de filtrage analogique (FBB1, FBB2), aptes à calculer dans la phase de fonctionnement normal la puissance moyenne du canal sélectionné,
   des deuxièmes moyens de comparaison (ADD2), incorporés dans le bloc numérique, aptes à comparer cette puissance moyenne de canal calculée avec une deuxième valeur de référence prédéterminée correspondant à une puissance de canal maximale souhaitée à l'entrée de l'étage de conversion analogique/numérique, et

des deuxièmes moyens de réglage (TB2) aptes à régler le gain du deuxième étage amplificateur jusqu'à minimiser l'écart entre la puissance de canal calculée et ladite deuxième valeur de référence.

9. Composant selon la revendication 7 ou 8, **caractérisé par** le fait quele module de synthonisation comprend un moyen commandable d'aiguillage de signal (MUX1), incorporé dans le bloc analogique, possédant une borne d'entrée (BE) connectée à l'entrée de signal, une première borne de sortie (BS1) connectée à l'entrée de l'étage de filtrage analogique (FBB1, FBB2), une deuxième borne de sortie (BS2) connectée directement à l'entrée de l'étage de conversion analogique/numérique (CAN1, CAN2),
   et par le fait que, dans la phase d'initialisation, les moyens d'aiguillage sont commandés de façon à connecter leur borne d'entrée et leur deuxième borne de sortie, et dans la phase de fonctionnement normal ils sont commandés de façon à connecter leur borne d'entrée et leur première borne de sortie.

10. Dispositif selon la revendication 9, **caractérisé par le fait que** les moyens d'aiguillage du signal (MUX1) sont disposés entre la sortie du premier étage atténuateur/amplificateur (ETA1) et l'entrée de l'étage de transposition de fréquence (MX1, MX2).

11. Dispositif selon l'une des revendications 7 à 10, **caractérisé par le fait que** le bloc numérique incorpore les premiers moyens de calcul (MCL).

12. Récepteur de signaux de télévision numérique par satellite, **caractérisé par le fait qu'**il comprend un composant électronique tel que défini dans l'une des revendications précédentes.

## FIG.1

EP 1 259 077 A1

# FIG.2

## FIG.3

## FIG.4

## FIG.4a

14

# FIG.5

# FIG.6

RECEPTION
SIGNAL GLOBAL

INITIALISATION

CALCUL
PUISSANCE GLOBALE —20
MOYENNE

21— CALCUL
ECART ← MM1

22
ECART Min ? —— NON

OUI

23
REGLAGE
GAIN
ETA 1

FONCTIONNEMENT
NORMAL

SELECTION
CANAL —24

CALCUL
PUISSANCE —25
CANAL

26— CALCUL
ECART ← MM2

27
ECART Min ? —— NON

OUI

FIN

28
REGLAGE
GAIN
AGC1, AGC2

# FIG.7

**Office européen**
**des brevets**

**RAPPORT DE RECHERCHE EUROPEENNE**

Numéro de la demande

EP 02 29 1175

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 091 931 A (BEN-EFRAIM NADAV ET AL) 18 juillet 2000 (2000-07-18) * colonne 5, ligne 46 - colonne 12, ligne 47 * * figures 4-7 * | 1,6,12 | H04N7/20 H04N5/44 H03D7/16 |
| A | MUSCHALLIK C: "SYSTEM CONSIDERATIONS ON SCPC FOR DIGITAL SATELLITE RECEIVERS WITH DIRECT CONVERSION" IEEE TRANSACTIONS ON CONSUMER ELECTRONICS, IEEE INC. NEW YORK, US, vol. 45, no. 3, août 1999 (1999-08), pages 956-964, XP000927017 ISSN: 0098-3063 * le document en entier * | 1-12 | |

**DOMAINES TECHNIQUES RECHERCHES (Int.Cl.7)**

H04N
H03D

Le présent rapport a été établi pour toutes les revendications

| Lieu de la recherche | Date d'achèvement de la recherche | Examinateur |
|---|---|---|
| LA HAYE | 26 juillet 2002 | Van der Zaal, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 1175

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-07-2002

| Document brevet cité au rapport de recherche | Date de publication | Membre(s) de la famille de brevet(s) | Date de publication |
|---|---|---|---|
| US 6091931 A | 18-07-2000 | JP 11027166 A | 29-01-1999 |

EPO FORM P0460

Pour tout renseignement concernant cette annexe : voir Journal Officiel de l'Office européen des brevets, No.12/82